# EUROPÄISCHE PATENTSCHRIFT

(11) **EP 0 521 308 B1**
(45) Veröffentlichungstag und Bekanntmachung des Hinweises auf die Patenterteilung: **20.04.1994**
(21) Anmeldenummer: 92109435.5
(22) Anmeldetag: 04.06.1992
(51) Int. Cl.: C02F 1/58, C02F 9/00, C01B 17/04

(54) **Verfahren zur gemeinsamen Aufarbeitung von NH3- und/oder H2S-haltigen Prozessabwässern sowie natriumsulfidhaltiger Natronlauge**
Process for joint treatment of NH3 and/or H2S containing process waste waters as well as sodium sulfide containing caustic soda
Procédé pour le traitement commun d'eaux résiduaires de fabrication contenant NH3 et/ou H2S de même que de soude caustique contenant Na2S

(30) Priorität: 30.10.1991 DE 4135763; 04.07.1991 DE 4122176
(43) Veröffentlichungstag der Anmeldung: 07.01.1993
(73) Patentinhaber: Krupp Koppers GmbH, 45143 Essen (DE)
(72) Erfinder: Eichner, Wilhelm, W-4300 Essen 1 (DE); Gross, Manfred, Dr., W-4390 Gladbeck (DE)

(56) Entgegenhaltungen:
- DE-A- 2 610 638
- DE-A- 3 209 858
- GB-A- 2 087 422
- PATENT ABSTRACTS OF JAPAN vol. 12, no. 82 (C-481)(2929) 15. M rz 1992CENTRAL PATENTS INDEX, BASIC ABSTRACTS JOURNAL Week 7805, Derwent PublicationsLtd., London, GB; AN 78-09542A
- CENTRAL PATENTS INDEX, BASIC ABSTRACTS JOURNAL Week 7832, Derwent PublicationsLtd., London, GB; AN 78-57768A
- CENTRAL PATENTS INDEX, BASIC ABSTRACTS JOURNAL Week 7301, Derwent PublicationsLtd., London, GB; AN 73-01336U
- Central Patant Index, BASIC ABSTRACTS JOURNAL, Week 7832 Derwent Publications Ltd. London, GB,AN 78-57768A

## Beschreibung

Die Erfindung betrifft ein Verfahren zur gemeinsamen Aufarbeitung von NH₃- und/oder H₂S-haltigen-Prozeßabwässern sowie natriumsulfidhaltiger Natronlauge zum Zwecke der Weiterbehandlung in einer biologischen Endreinigungsstufe.

Bei der hydrierenden Behandlung von Rohölfraktionen sowie bei weiteren chemischen Verfahren fallen Prozeß-Abwässer an, die verfahrensbedingt mit NH₃ und/oder H₂S belastet sind. Bei bestimmten petrochemischen Prozessen sowie bei der Kunstseidenherstellung fällt eine vielfach als Ablauge bezeichnete natriumsulfidhaltige Natronlauge an. In beiden Fällen können die anfallenden Flüssigkeiten wegen ihres NH₃- und/oder H₂S-Gehaltes sowie ihrer Alkalität nicht ohne weiteres einer biologisch arbeitenden Abwasseraufbereitungsanlage zugeführt werden. Daher müssen die genannten Schadstoffe aus den Flüssigkeiten vor der Einleitung in die biologische Endreinigungsstufe durch geeignete Maßnahmen entfernt werden. Sofern hierbei in einem Betrieb bzw. Betriebskomplex sowohl NH₃- und/oder H₂S-haltige Prozeßabwässer als auch natriumsulfidhaltige Natronlauge anfallen, ist es aus verfahrenstechnischen Gründen angebracht, beide Flüssigkeiten vor der Einleitung in die biologische Endreinigungsstufe einer gemeinsamen Aufarbeitung zu unterwerfen.

Ziel der vorliegenden Erfindung ist es daher, ein Verfahren zu schaffen, das die gemeinsame Aufarbeitung beider Flüssigkeitsströme unter möglichst wirtschaftlichen Bedingungen erlaubt, wobei gleichzeitig eine Emission von NH₃ und/oder H₂S in die Atmosphäre weitestgehend vermieden werden soll.

Das der Lösung dieser Aufgabe dienende Verfahren ist erfindungsgemäß gekennzeichnet durch die Anwendung der Merkmale a) bis e) des Hauptanspruches.

Das heißt, bei der Durchführung des erfindungsgemäßen Verfahrens wird in einem ersten Verfahrensschritt die natriumsulfidhaltige Natronlauge durch Zugabe von Schwefelsäure bis auf einen p_{H}-Wert zwischen 3,0 und 7,0 angesäuert. Hierbei wird der als Natriumsulfid gebundene Schwefel in H₂S überführt. Außerdem wird die noch vorhandene freie Natronlauge zu Natriumsulfat umgesetzt. Erst im Anschluß an diese Ansäuerung wird die so behandelte Ablauge mit den NH₃- und/oder H₂S-haltigen Prozeßabwässern vereinigt und gemeinsam mit diesen der weiteren Behandlung unterworfen. In der Ansäuerung der Natronlauge, bei der vorzugsweise ein p_{H}-Wert zwischen 3,0 und 5,0 eingestellt wird, ist ein wesentlicher Schritt des erfindungsgemäßen Verfahrens zu sehen, denn ohne vorherige Ansäuerung würde sich bei einer gemeinsamen Einleitung von natriumsulfidhaltiger Natronlauge und NH₃- und/oder H₂S-haltigen Prozeßabwässern in die Abtriebskolonne in dieser ein so hoher p_{H}-Wert einstellen, daß ein möglichst vollständiger H₂S-Abtrieb aus der anfallenden Flüssigkeit nicht mehr gewährleistet wäre.

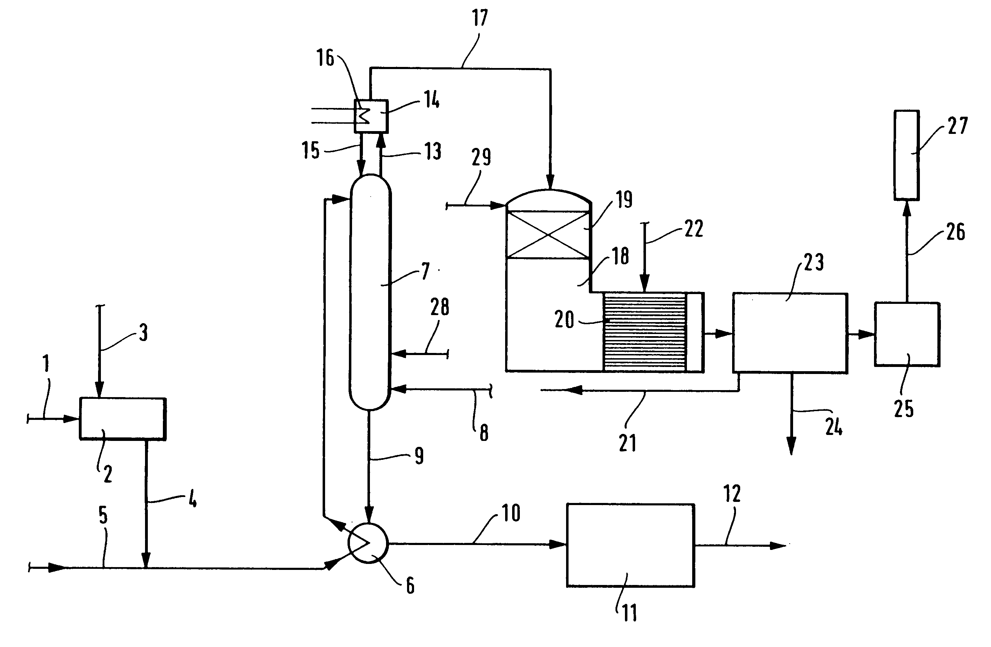

Weitere Einzelheiten des erfindungsgemäßen Verfahrens ergeben sich aus den vorliegenden Unteransprüchen sowie der nachfolgenden Verfahrenserläuterung an Hand des in der Abbildung dargestellten Fließschemas.

Dabei wird die aufzuarbeitende natriumsulfidhaltige Natronlauge über die Leitung 1 in den Mischbehälter 2 eingeleitet, dem über die Leitung 3 die zur Ansäuerung der Natronlauge erforderliche Schwefelsäure zugeführt wird. Nach erfolgter Ansäuerung wird die Ablauge aus dem Mischbehälter 2 über die Leitung 4 abgezogen und den über die Leitung 5 zufließenden NH₃- und/oder H₂S-haltigen Prozeßabwässern zugemischt. Über die Leitung 5 werden danach die zusammengeführten Stoffströme zunächst durch den Wärmetauscher 6 geleitet und anschließend auf den Kopf der Abtriebskolonne 7 aufgegeben. Im Wärmetauscher 6 wird die durch die Leitung 5 fließende Flüssigkeit im indirekten Wärmetausch mit dem aus der Abtriebskolonne 7 ablaufenden Abwasser bis auf eine Temperatur erwärmt, die der Temperatur entspricht, die gleichgewichtsbedingt am Kopf der Abtriebskolonne 7 herrscht. Normalerweise liegt diese Temperatur im Bereich zwischen 95 und 110 °C. Aus der entsprechend erwärmten Flüssigkeit werden in der Abtriebskolonne 7 NH₃ und/oder H₂S in an sich bekannter Weise mit Wasserdampf abgetrieben. Der hierfür erforderliche Wasserdampf wird über die Leitung 8 in die Abtriebskolonne 7 eingeleitet. Bei dem über die Leitung 8 zugeführten Wasserdampf kann es sich ganz oder teilweise um den Niederdruckdampf handeln, der in der nachgeschalteten Claus-Anlage anfällt und der im allgemeinen sonst keiner weiteren Verwendung zugeführt werden kann. Dies erlaubt eine besonders wirtschaftliche Durchführung des erfindungsgemäßen Verfahrens. Anstelle der Direktzugabe von Wasserdampf über die Leitung 8 kann der für den Abtrieb von NH₃ und/oder H₂S erforderliche Stripdampf auch durch indirektes Verdampfen von Prozeßwasser in einem in der Abbildung nicht dargestellten Reboiler erzeugt werden. Der Druck in der Abtriebskolonne 7 wird vorzugsweise so eingestellt, daß die freigesetzten NH₃- und/oder H₂S-haltigen Brüden ohne weitere Verdichtung durch die nachgeschalteten Behandlungsstufen geführt werden können.

Das aus dem Sumpf der Abtriebskolonne 7 ablaufende Abwasser, welches weitgehend von NH₃ und H₂S befreit ist, gelangt über die Leitung 9 in den Wärmetauscher 6, in dem es bis auf eine Temperatur zwischen 50 und 80 °C abgekühlt wird. Anschließend kann das Abwasser nach weiterer Abkühlung über die Leitung 10 der biologischen Endreinigungsstufe 11 zugeführt werden. Nach erfolgter Endreinigung wird das Abwasser über die Leitung 12 in den Vorfluter abgelassen.

Die am Kopf der Abtriebskolonne 7 freigesetzten NH₃- und/oder H₂S-haltigen Brüden werden über die Leitung 13 in den Kondensator 14 eingeleitet, in dem der in den Brüden vorhandene Wasserdampf weitgehend auskondensiert wird, so daß dadurch die weitere chemische Umsetzung der Brüden in der Claus-Anlage begünstigt ist. Das dabei anfallende, mit NH₃ und/oder H₂S beladene Kondensat fließt über die Leitung 15 in die Abtriebskolonne 7 zurück. Die Kühlschlange 16 dient der notwendigen Kühlwasserzufuhr zum Kondensator 14.

Aus dem Kondensator 14 gelangen die NH₃- und/oder H₂S-haltigen Brüden, deren Wasserdampfgehalt nur noch zwischen 10 und 20 Vol.-% liegt, über die Leitung 17 in den Verbrennungsofen 18 der Claus-Anlage. Hier erfolgt eine Teilverbrennung des in den Brüden enthaltenen H₂S, wobei in an sich bekannter Weise zunächst nur ein Drittel des vorhandenen H₂S zu SO₂ und H₂O verbrannt wird. Im Verbrennungsofen 18 ist hierbei eine Katalysatorschicht 19 angeordnet, die einen NH₃-Spaltkatalysator enthält, an dem das in den Brüden enthaltene NH₃ soweit zu Stickstoff und Wasserstoff gespalten wird, daß im nachgeschalteten Claus-Reaktor keine Bildung von Ammoniumverbindungen auftritt, die den katalytischen Claus-Prozeß beeinträchtigen würden. Im Anschluß an die H₂S-Teilverbrennung und NH₃-Zersetzung wird das anfallende heiße Gas in einem Abhitzekessel 20 bis auf eine Temperatur von ca. 150 °C gekühlt. Der hierbei erzeugte Niederdruckdampf wird über die Leitung 21 abgezogen und kann anschließend über die Leitung 8 als Stripdampf in die Abtriebskolonne 7 eingeleitet werden. Die erforderliche Speisewasserzufuhr zum Abhitzekessel 20 erfolgt über die Leitung 22. Der Verbrennungsofen 18 und der Abhitzekessel 20 können dabei, wie in der Abbildung dargestellt ist, eine bauliche Einheit bilden. Sie können aber auch in getrennten Apparaturen untergebracht werden. Entsprechendes gilt auch für den nachgeschalteten Claus-Reaktor 23, in dem das aus dem Abhitzekessel 20 austretende Gas eine weitere Umsetzung erfährt, bei der das im Gas noch vorhandene H₂S mit dem bereits gebildeten SO₂ in Gegenwart von Katalysatoren zu Elementarschwefel und Wasser umgesetzt wird. Für diese Umsetzung wird zweckmäßigerweise ein zwei- oder mehrstufiger Claus-Reaktor verwendet. Der dabei gebildete Elementarschwefel wird über die Leitung 24 aus dem Claus-Reaktor 23 abgezogen und seiner Weiterbehandlung bzw. -verarbeitung zugeführt. Da das aus dem Claus-Reaktor 23 austretende Restgas normalerweise noch geringe Mengen an nicht umgesetztem H₂S und SO₂ sowie organische Schwefelverbindungen und elementaren Schwefeldampf enthält, kann es in der Regel nicht ohne weiteres in die Atmosphäre abgelassen werden, sondern wird zunächst einer Nachbehandlungsstufe 25 zugeführt, in der die noch vorhandenen Schadstoffe durch geeignete Maßnahmen, wie z.B. durch eine Abgasreinigung sowie durch thermische oder katalytische Nachbehandlung, aus dem Gas entfernt werden. Danach kann das Gas über die Leitung 26 dem Kamin 27 zugeführt werden, durch den es ohne Schädigung der Umwelt in die Atmosphäre abgelassen wird. Die praktische Ausgestaltung der Nachbehandlungsstufe 25 richtet sich natürlich nach der Menge und der Zusammensetzung des anfallenden Restgases. Da es sich hierbei jedoch um an sich bekannte Maßnahmen handelt, sind Einzelheiten dieser Nachbehandlungsstufe 25 im Fließschema nicht dargestellt worden.

Sofern in den aufzuarbeitenden Prozeßabwässern ein Teil des vorhandenen NH₃ als nicht wasserdampfflüchtiges NH₃, wie zum Beispiel Ammoniumchlorid oder -sulfat, vorliegt, muß dieses fixe NH₃ vor dem Abtrieb durch Zugabe von Natronlauge freigesetzt werden. Zu diesem Zweck kann zusätzlich über die Leitung 28 Natronlauge in den unteren Teil der Abtriebskolonne 7 eingeleitet werden. Dabei wird zweckmäßigerweise soviel Natronlauge zugegeben, daß der p_{H}-Wert des über die Leitung 9 ablaufenden Abwassers etwa bei 9 - 9,5 liegt.

Selbstverständlich kann das erfindungsgemäße Verfahren auch in der Weise betrieben werden, daß über die Leitung 29 zusätzlich ein H₂S-haltiges Gas, das aus einer anderen Quelle stammt, in den Verbrennungsofen 18 der Claus-Anlage eingeleitet und dort danach gemeinsam mit den NH₃ und/oder H₂S-haltigen Brüden weiterbehandelt wird.

Die Wirksamkeit des erfindungsgemäßen Verfahrens wird durch das nachfolgende Ausführungsbeispiel belegt:

Hierbei wurden 32 m³/h eines NH₃ -und H₂S-haltigen Prozeßabwassers, das bei der hydrierenden Behandlung von Rohölfraktionen anfällt, gemeinsam mit 500 l/h natriumsulfidhaltiger Natronlauge, die bei der Entfernung von H₂S aus Kohlenwasserstoffraktionen anfällt, aufgearbeitet. Das Prozeßabwasser war dabei mit 15 g/l NH₃, davon 1 g/l NH₃ fix, sowie 21 g/l H₂S belastet. Die Natronlauge enthielt 100 g/l als Natriumsulfid gebundenen H₂S. Außerdem ist Restalkalität vorhanden.

Für die Ansäuerung der natriumsulfidhaltigen Natronlauge sind 96,8 kg/h H₂SO₄ (100 %), für die Überführung des NH₃ fix im wasserdampfflüchtigen NH₃ 90 kg/h NaOH (100 %) erforderlich. Die Prozeßabwässer und die angesäuerte Ablauge wurden gemeinsam am Kopf einer Abtriebskolonne, die mit einem Kopfkondensator und einem Reboiler ausgerüstet ist, aufgegeben und die Natronlauge zur Behandlung des NH₃ fix in den unteren Teil der Kolonne zudosiert. Am Ausgang des Kopfkondensators zieht man Brüden ab, die 13,3 Vol.-% H₂O, 49,3 Vol-% NH₃ und 32,4 Vol.-% H₂S enthalten. Das aus der Kolonne ablaufende Abwasser enthält nur noch max. 5 mg/l H₂S sowie max. 150 mg/l NH₃ und kann mit diesem niedrigen NH₃- und H₂S-Gehalt in einer biologischen Endreinigngsstufe weiterbehandelt werden. Die Brüden wurden der Claus-Anlage zugeführt und dort in der weiter oben beschriebenen Art und Weise weiterbehandelt.

## Patentansprüche

1. Verfahren zur gemeinsamen Aufarbeitung von NH₃- und/oder H₂S-haltigen Prozeßabwässern sowie natriumsulfidhaltiger Natronlauge zum Zwecke der Weiterbehandlung in einer biologischen Endreinigungsstufe, **dadurch gekennzeichnet**, daß man
a) die natriumsulfidhaltige Natronlauge durch Zugabe von Schwefelsäure bis auf einen p_{H}-Wert zwischen 3,0 und 7,0 ansäuert,
b) die angesäuerte Ablauge mit den zu behandelnden NH₃- und/oder H₂S-haltigen Prozeßabwässern vereinigt und die zusammengeführten Stoffströme im indirekten Wärmeaustausch mit dem aus der dem NH₃- und H₂S-Abtrieb dienenden Abtriebskolonne ablaufenden Abwasser bis auf eine Temperatur erwärmt, die der Temperatur entspricht, die gleichgewichtsbedingt am Kopf der Abtriebskolonne herrscht,
c) die entsprechend erwärmte Flüssigkeit am Kopf in die Abtriebskolonne einleitet, in der NH₃ und H₂S in an sich bekannter Weise mit Wasserdampf abgetrieben werden, wobei die anfallenden NH₃- und/oder H₂S-haltigen Brüden über Kopf aus der Abtriebskolonne abgezogen werden, während das aus dem Sumpf der Kolonne ablaufende Abwasser nach entsprechender Abkühlung der biologischen Endreinigungsstufe zugeführt wird,
d) die abgetriebenen NH₃- und/oder H₂S-haltigen Brüden einer Wasserdampfkondensation unterwirft und anschließend in einer Claus-Anlage weiterbehandelt, die mit einem NH₃-Spaltkatalysator ausgerüstet ist,
und
e) das aus der Claus-Anlage austretende Restgas vor der Ableitung in die Atmosphäre einer Nachbehandlung unterwirft.

2. Verfahren nach Anspruch 1, **dadurch gekennzeichnet**, daß bei der Ansäuerung der natriumsulfidhaltigen Natronlauge ein p_{H}-Wert zwischen 3,0 und 5,0 eingestellt wird.

3. Verfahren nach den Ansprüchen 1 und 2, **dadurch gekennzeichnet**, daß der für den NH₃- und H₂S-Abtrieb erforderliche Wasserdampf direkt in die Abtriebskolonne eingeleitet wird oder der Kolonne über einen Reboiler zugeführt wird,

4. Verfahren nach den Ansprüchen 1 bis 3, **dadurch gekennzeichnet**, daß der im Abhitzekessel der Claus-Anlage anfallende Niederdruckdampf für den NH₃- und H₂S-Abtrieb genutzt wird.

5. Verfahren nach den Ansprüchen 1 bis 4, **dadurch gekennzeichnet**, daß zur Spaltung der fixen Ammoniakverbindungen zusätzlich Natronlauge in den unteren Teil der Abtriebskolonne eingeleitet wird.

6. Verfahren nach den Ansprüchen 1 bis 5, **dadurch gekennzeichnet**, daß der Druck in der Abtriebskolonne so eingestellt wird, daß die abgetriebenen NH₃- und/oder H₂S-haltigen Brüden ohne weitere Verdichtung durch die nachgeschalteten Behandlungsstufen geführt werden können.

7. Verfahren nach den Ansprüchen 1 bis 6, **dadurch gekennzeichnet**, daß aus den abgetriebenen NH₃- und/oder H₂S-haltigen Brüden vor der Einleitung in die Claus-Anlage Wasserdampf in einem solchen Umfange auskondensiert wird, daß deren Wasserdampfgehalt anschliessend nur noch zwischen 10 und 20 Vol.-% liegt.

8. Verfahren nach den Ansprüchen 1 bis 7, **dadurch gekennzeichnet**, daß die NH₃- und/oder H₂S-haltigen Brüden zusammen mit weiteren, aus anderer Quelle stammenden H₂S-haltigen Gasen in der Claus-Anlage behandelt werden.

9. Verfahren nach den Ansprüchen 1 bis 8, **dadurch gekennzeichnet**, daß die Nachbehandlung des aus der Claus-Anlage austretenden Restgases durch eine Abgasreinigung sowie eine thermisch oder katalytisch arbeitende Nachverbrennungsstufe erfolgt.

## Claims

1. Process for the joint processing of NH₃-containing and/or H₂S-containing process waste waters and sodium sulphide-containing sodium hydroxide solution for the purpose of further treatment in a biological final purification stage, characterized in that
a) the sodium sulphide-containing sodium hydroxide solution is acidified by addition of sulphuric acid to a pH of between 3.0 and 7.0,
b) the acidified waste lye is combined with the NH₃-containing and/or H₂S-containing process waste waters and the united mass streams are heated in indirect heat exchange with the waste water running off from the stripping column serving for the stripping of NH₃ and H₂S up to a temperature which corresponds to the temperature which prevails due to equilibrium at the head of the stripping column,
c) the correspondingly heated liquid is introduced into the stripping column at the head, in which stripping column the NH₃ and H₂S are stripped by steam in a manner known per se, the resulting NH₃-containing and/or H₂S-containing vapours being taken off from the stripping column overhead, while the waste water running off from the bottom of the column, after appropriate cooling, is fed to the biological final purification stage,
d) the NH₃-containing and/or H₂S-containing vapours stripped off are subjected to steam condensation and then further treated in a Claus plant which is equipped with an NH₃-cleavage catalyst,
and
e) the residual gas exiting the Claus plant is subjected to an aftertreatment before discharge into the atmosphere.

2. Process according to Claim 1, characterized in that, in the acidification of the sodium sulphide-containing sodium hydroxide solution, a pH is established of between 3.0 and 5.0.

3. Process according to Claims 1 and 2, characterized in that the steam required for the NH₃ stripping and H₂S stripping is introduced directly into the stripping column or is fed to the column via a reboiler.

4. Process according to Claims 1 to 3, characterized in that the low pressure steam resulting in the waste heat boiler of the Claus plant is utilized for the NH₃ stripping and H₂S stripping.

5. Process according to Claims 1 to 4, characterized in that, to cleave the fixed ammonia compounds, additional sodium hydroxide solution is introduced into the lower part of the stripping column.

6. Process according to Claims 1 to 5, characterized in that the pressure in the stripping column is adjusted so that the NH₃-containing and/or H₂S-containing vapours stripped off can be conducted through the downstream treatment stages without further compression.

7. Process according to Claims 1 to 6, characterized in that steam is condensed out of the NH₃-containing and/or H₂S-containing vapours stripped off, before their introduction into the Claus plant, to such an extent that the water vapour content of the vapours is then only between 10 and 20% by volume.

8. Process according to Claims 1 to 7, characterized in that the NH₃-containing and/or H₂S-containing vapours are treated in the Claus plant together with further H₂S-containing gases originating from another source.

9. Process according to Claims 1 to 8, characterized in that the aftertreatment of the residual gas exiting the Claus plant is performed by an exhaust gas purification and an afterburning stage operating thermally or catalytically.

## Revendications

1. Procédé de traitement conjoint d'eaux usées de procédé, contenant de l'ammoniac et/ou de l'hydrogène sulfuré, ainsi que d'une solution d'hydroxyde de sodium contenant du sulfure de sodium, aux fins de retraitement dans un étage biologique d'épuration finale, caractérisé en ce que
a) on acidifie la solution d'hydroxyde de sodium contenant du sulfure de sodium, par addition d'acide sulfurique, jusqu'à atteindre une valeur de pH comprise entre 3,0 et 7,0,
b) on réunit la lessive résiduaire acidifiée avec les eaux usées de procédé contenant du NH₃ et/ou du H₂S et à traiter, et l'on chauffe les courants de matière réunis, suivant un échange de chaleur indirect, avec les eaux usées sortant de la colonne d'extraction servant à l'extraction du NH₃ et du H₂S, jusqu'à atteindre une température correspondant à la température régnant à l'équilibre, à la tête de la colonne d'extraction,
c) on introduit le liquide chauffé de manière correspondante à la tête dans la colonne d'extraction, dans laquelle l'extraction du NH₃ et du H₂S est effectuée, de manière connue en soi, à l'aide de vapeur d'eau, les buées produites et contenant du NH₃ et/ou du H₂S étant extraites en tête de la colonne d'extraction, tandis que l'eau usée, sortant à la base de la colonne, est délivrée, après un refroidissement correspondant, à l'étage biologique d'épuration finale.
d) les buées séparées, contenant du NH₃ et/ou du H₂S, sont soumises, à une condensation de la vapeur d'eau, puis retraitées dans une installation de Claus, qui est équipée d'un catalyseur de dissociation du NH₃,
et que
e) le gaz résiduaire sortant de l'installation de Claus est soumis à un retraitement avant son évacuation dans l'atmosphère.

2. Procédé selon la revendication 1,
caractérisé en ce qu'on établit une valeur de pH comprise entre 3,0 et 5,0 lors de l'acidification de la solution d'hydroxyde de sodium contenant du sulfure de sodium.

3. Procédé selon les revendications 1 et 2,
caractérisé en ce que la vapeur d'eau nécessaire pour l'extraction du NH₃ et/ou du H₂S est directement introduite dans la colonne d'extraction ou délivrée à la colonne par l'intermédiaire d'un rebouilleur.

4. Procédé selon les revendications 1 à 3, caractérisé en ce que la vapeur basse-pression se formant dans la chaudière de récupération de l'installation de Claus, est exploitée pour l'extraction du NH₃ et du H₂S.

5. Procédé selon les revendications 1 à 4,
caractérisé en ce que l'on introduit en plus, dans la partie inférieure de la colonne d'extraction, de la solution d'hydroxyde de sodium, en vue d'opérer une dissociation des combinaisons ammoniaqcales fixes.

6. Procédé selon les revendications 1 à 5,
caractérisé en ce que la pression régnant dans la colonne d'extraction est réglée de telle façon que les buées extraites et contenant du NH₃ et/ou du H₂S peuvent être délivrées sans compression supplémentaire, à travers les étages de traitement montés en aval.

7. Procédé selon les revendications 1 à 6,
caractérisé en ce que de la vapeur d'eau est extraite par condensation à partir des buées extraites et contenant du NH₃ et/ou du H₂S, avant l'introduction dans l'installation de Claus, à un degré tel que sa teneur en eau n'est plus ensuite comprise qu'entre 10 et 20 % en volume.

8. Procédé selon les revendications 1 à 7,
caractérisé en ce que les buées contenant du NH₃ et/ou du H₂S sont traitées dans l'installation de claus, conjointement avec d'autres gaz contenant du H₂S, provenant d'une autre source.

9. Procédé selon les revendications 1 à 8,
caractérisé en ce que le retraitement du gaz résiduaire sortant de l'installation de Claus a lieu au moyen d'une épuration des gaz de rejet, ainsi que d'un étage de postcombustion, travaillant de façon thermique ou catalytique.
